# EUROPÄISCHE PATENTSCHRIFT

(11) **EP 4 165 767 B1**
(45) Veröffentlichungstag und Bekanntmachung des Hinweises auf die Patenterteilung: **07.05.2025**
(21) Anmeldenummer: 21728880.2
(22) Anmeldetag: 25.05.2021
(51) Int. Cl.: H02M 3/158, H02M 3/335

(54) **DUAL-ACTIVE-BRIDGE-WANDLER UND VERFAHREN ZUM BETREIBEN EINES DUAL-ACTIVE-BRIDGE-WANDLERS**
DUAL ACTIVE BRIDGE CONVERTER AND METHOD FOR OPERATING A DUAL ACTIVE BRIDGE CONVERTER
CONVERTISSEUR À DOUBLE PONT ACTIF ET PROCEDE DE FONCTIONNEMENT D'UN CONVERTISSEUR À DOUBLE PONT ACTIF

(30) Priorität: 12.06.2020 DE 102020207325
(43) Veröffentlichungstag der Anmeldung: 19.04.2023
(73) Patentinhaber: Robert Bosch GmbH, 70442 Stuttgart (DE)
(72) Erfinder: RIEDEL, Jan, 73733 Esslingen Am Neckar (DE); WINTER, Christian, 71732 Tamm (DE)
(86) Internationale Anmeldenummer: PCT/EP2021/063871
(87) Internationale Veröffentlichungsnummer: WO 2021/249765

(56) Entgegenhaltungen:
- US-A1- 2019 148 965
- US-A1- 2020 266 714

## Beschreibung

Die vorliegende Erfindung betrifft ein Verfahren zum Betreiben eines Dual-Active-Bridge-Wandlers. Die vorliegende Erfindung betrifft ferner einen Dual-Active-Bridge-Wandler sowie eine Spannungswandleranordnung mit einem Dual-Active-Bridge-Wandler.

### Stand der Technik

Dual-Active-Bridge-Wandler sind bidirektionale Gleichspannungswandler mit zwei Halbleiter-Vollbrücken. Aufgrund ihrer Kompaktheit sind Dual-Active-Bridge-Wandler insbesondere für Anwendungen mit begrenztem Bauraum von Vorteil. Darüber hinaus ermöglichen Dual-Active-Bridge-Wandler auch eine galvanische Potentialtrennung zwischen den beiden Gleichspannungsseiten. Ein Detektionsverfahren unter Verwendung von Dual-Active-Bridge-Wandlern ist beispielsweise aus EP 3 285 382 A1 bekannt. Ein Dual-Active-Bridge-Wandler und ein Verfahren zum Betreiben eines Dual-Active-Bridge-Wandlers sind aus der Druckschrift US 2019/148965 A1 bekannt, worin die Spannungsvorgabe der Sekundärseite als Regelgröße mit einem Rippelanteil überlagert wird und die Ansteuerung des Dual-Active-Bridge-Wandlers unter der Verwendung der mit dem Rippelanteil überlagerten Regelgröße durchgeführt wird, wobei der Rippelanteil eine periodische Größe ist.

Bei einem Betrieb von Dual-Active-Bridge-Wandlern können sogenannte Totzeiteffekte die Regelbarkeit des Systems beeinflussen. Unter einer Totzeit kann allgemein die Zeitspanne zwischen einer Signaländerung am Systemeingang und einer Signalantwort am Systemausgang zu verstehen. Im Falle von Eindrücken, wie sie insbesondere bei Dual-Active-Bridge-Wandern eingesetzt werden, entspricht eine Totzeit zwischen dem Ausschalten eines Schaltelements der Halbbrücke und dem Einschalten des jeweils anderen Schaltelements der Halbbrücke. Derartige Totzeiten treten für Dual-Active-Bridge-Wandler im Übergangsbereich zwischen einem hartschaltenden und einem weichschaltenden Betrieb auf. Dieser Übergangsbereich wird auch als Totzeitbereich beschrieben.

### Offenbarung der Erfindung

Die vorliegende Erfindung schafft ein Verfahren zum Betreiben eines Dual-Active-Bridge-Wandlers, einen Dual-Active-Bridge-Wandler sowie eine Spannungswandleranordnung mit den Merkmalen der unabhängigen Patentansprüche. Weitere vorteilhafte Ausführungsformen sind Gegenstand der abhängigen Patentansprüche.

### Demgemäß ist vorgesehen:

Ein Verfahren zum Betreiben eines Dual-Active-Bridge-Wandlers mit einem Schritt zum Ermitteln einer Regelgröße für den Dual-Active-Bridge-Wandler. Das Verfahren umfasst weiter einen Schritt zum Überlagern der Regelgröße mit einem Rippelanteil, sowie einen Schritt zum Ansteuern des Dual-Active-Bridge-Wandlers unter Verwendung der mit dem Rippelanteil überlagerten Regelgröße.

### Weiterhin ist vorgesehen:

Ein Dual-Active-Bridge-Wandler mit einer Steuereinrichtung. Die Steuereinrichtung ist dazu ausgelegt, eine Regelgröße für den Dual-Active-Bridge-Wandler zu ermitteln, die Regelgröße mit einem Rippelanteil zu überlagern und den Dual-Active-Bridge-Wandler unter Verwendung der mit dem Rippelanteil überlagerten Regelgröße anzusteuern.

### Schließlich ist vorgesehen:

Eine Spannungswandleranordnung mit mindestens einem erfindungsgemäßen Dual-Active-Bridge-Wandler.

### Vorteile der Erfindung

Der vorliegenden Erfindung liegt die Erkenntnis zugrunde, dass bei einem Dual-Active-Bridge-Wandler in einem Übergangsbereich zwischen einem hartschaltenden und einem weichschaltenden Betrieb es aufgrund von Totzeiten bei der Ansteuerung der Schaltelemente in dem Dual-Active-Bridge-Wandler es zu einer Stagnation der Stellgröße oder zu einer Selbstverstärkung der Stellgröße kommen kann. Für eine zuverlässige und stabile Regelung der Ausgangsgröße eines Dual-Active-Bridge-Wandlers ist jedoch eine stetige und streng monotone Kennlinie der Regelstrecke erforderlich.

Es ist daher eine Idee der vorliegenden Erfindung, dieser Erkenntnis Rechnung zu tragen und eine Ansteuerung für einen Dual-Active-Bridge-Wandler vorzusehen, welcher den Totzeit-bedingten Effekten im Übergangsbereich zwischen hartschaltendem Betrieb und weichschaltendem Betrieb des Dual-Active-Bridge-Wandlers entgegenwirken kann. Hierzu ist es erfindungsgemäß vorgesehen, die Regelgröße für den Dual-Active-Bridge-Wandler mit einem zusätzlichen Rippelanteil zu überlagern. Bei diesem Rippelanteil kann es sich um ein alternierendes Offset, beispielsweise ein periodisches Signal handeln. Die Frequenz des Rippels kann dabei insbesondere derart gewählt werden, dass einerseits der Dual-Active-Bridge-Wandler den rippelbedingten Änderungen folgen kann, andererseits jedoch es zu keinen signifikanten rippelbedingten Störungen oder Schwankungen der Ausgangsgröße des Dual-Active-Bridge-Wandlers kommt. Die konkrete Frequenz bzw. der konkrete Frequenzbereich, in dem sich der Rippel bewegen kann, kann daher von den weiteren Betriebsparametern des Dual-Active-Bridge-Wandlers abhängen.

Durch die Überlagerung der Regelgröße für den Dual-Active-Bridge-Wandler mit einem zusätzlichen Rippel wird die Regelgröße mit einem Offset beaufschlagt, so dass der Dual-Active-Bridge-Wandler für jeden Wert der Regelgröße auch aufgrund des überlagerten Rippels zumindest zeitweise auch außerhalb des Totzeitbereiches betrieben wird. Hierzu ist für den überlagernden Rippel eine entsprechend ausreichend große Amplitude vorzusehen.

Auf diese Weise kann gewährleistet werden, dass auch im Totzeitbereich des Dual-Active-Bridge-Wandlers eine streng monotone Steigung der Kennlinie für den Zusammenhang zwischen Regelgröße und Ausgangsgröße erreicht wird.

Wird diese Strategie über den gesamten Betriebsbereich eingesetzt, so ist kein genaues Wissen über die konkrete Position des Totzeitbereichs des Dual-Active-Bridge-Wandlers erforderlich. Hierdurch kann insbesondere eine hohe Robustheit gegenüber Bauteiltoleranzen erreicht werden.

Gemäß einer Ausführungsform umfasst die Regelgröße einen Sollwert für einen Ausgangsstrom des Dual-Active-Bridge-Wandlers. Insbesondere kann die Regelgröße sich auf eine Phasenverschiebung zwischen der Ansteuerung auf der Eingangsseite und der Ausgangsseite des Dual-Active-Bridge-Wandlers beziehen.

Gemäß einer Ausführungsform umfasst der Rippelanteil eine periodische Größe mit einer vorbestimmten Signalform. Die Amplitude des Rippelanteils sollte dabei zumindest so groß gewählt werden, dass beim Durchlaufen des Totzeitbereiches eine Stagnation der Stellgröße vermieden werden kann.

Gemäß einer Ausführungsform kann die vorbestimmte Signalform des Rippelanteils einen rechteckförmigen Signalverlauf, einen sinusförmigen Signalverlauf, einen dreieckförmigen Signalverlauf oder einen sägezahnförmigen Signalverlauf umfassen. Darüber hinaus sind auch beliebige andere geeignete Signalverläufe möglich. Insbesondere ein rechteckförmiger Signalverlauf kann durch ein geeignetes digitales Signal sehr einfach realisiert werden. Darüber hinaus können beispielsweise durch einen sinusförmigen Signalverlauf gegebenenfalls hochfrequente Störanteile minimiert werden.

Gemäß einer Ausführungsform weist der Rippelanteil eine feste vorbestimmte Frequenz auf. Die Wahl einer geeigneten Frequenz kann dabei von den weiteren Betriebseigenschaften des Dual-Active-Bridge-Wandlers abhängen. Insbesondere sollte die vorbestimmte Frequenz ausreichend hoch sein, um Schwankungen in der Ausgangsgröße des Dual-Active-Bridge-Wandlers zu vermeiden.

Gemäß einer Ausführungsform kann die Frequenz des Rippelanteils innerhalb eines vorbestimmten Frequenzbereiches variiert werden. Insbesondere kann die Frequenz innerhalb des vorbestimmten Frequenzbereiches periodisch variiert werde. Durch die Variation der Frequenz für den Rippelanteil können weitere Störeffekte eliminiert oder zumindest verringert werden.

Gemäß einer Ausführungsform kann die Amplitude des Rippelanteils unter Verwendung eines aktuellen Werts der Regelgröße eingestellt werden. Beispielsweise kann die Amplitude in einem Bereich innerhalb oder in einem vorbestimmten Bereich um den zu erwartenden Totzeitbereich im Übergang zwischen hartschalendem und weichschaltendem Betrieb des Dual-Active-Bridge-Wandlers angehoben werden. Entsprechend kann die Amplitude des Rippelanteils in Bereichen, welche weiter von dem zu erwartenden Totzeitbereich entfernt sind, abgesenkt werden. Darüber hinaus sind selbstverständlich auch beliebige andere Schemata für das Anpassen einer Amplitude des Rippelanteils möglich.

Gemäß einer Ausführungsform der Spannungswandleranordnung kann die Spannungswandleranordnung mehrere Dual-Active-Bridge-Wandler umfassen. In einem solchen Fall kann die Regelgröße der einzelnen Dual-Active-Bridge-Wandler mit unterschiedlichen Rippelanteilen überlagert werden. Insbesondere können einzelne Charakteristika, wie beispielsweise die Frequenzen der Rippel oder aber auch die Signalformen der Rippel für die einzelnen Dual-Active-Bridge-Wandler unterschiedlich sein.

Die obigen Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann auch Einzelaspekte als Verbesserungen oder Ergänzungen zu den jeweiligen Grundformen der Erfindung hinzufügen.

### Kurze Beschreibung der Zeichnungen

Weitere Merkmale und Vorteile der Erfindung werden nachfolgend anhand der Figuren erläutert. Dabei zeigen:
- Figur 1:: eine schematische Darstellung eines Prinzipschaltbilds eines Dual-Active-Bridge-Wandlers, wie er einer Ausführungsform der vorliegenden Erfindung zugrunde liegt;
- Figur 2:: schematische Spannungsverläufe beim Betreiben eines Dual-Active-Bridge-Wandlers;
- Figur 3:: eine schematische Darstellung eines Ausgangsstroms sowie der zugrunde liegenden Regelgröße beim Betrieb eines Dual-Active-Bridge-Wandlers gemäß einer Ausführungsform; und
- Figur 4:: ein Ablaufdiagramm, wie es einem Verfahren zum Betreiben eines Dual-Active-Bridge-Wandlers gemäß einer Ausführungsform zugrunde liegt.

### Beschreibung der Ausführungsformen

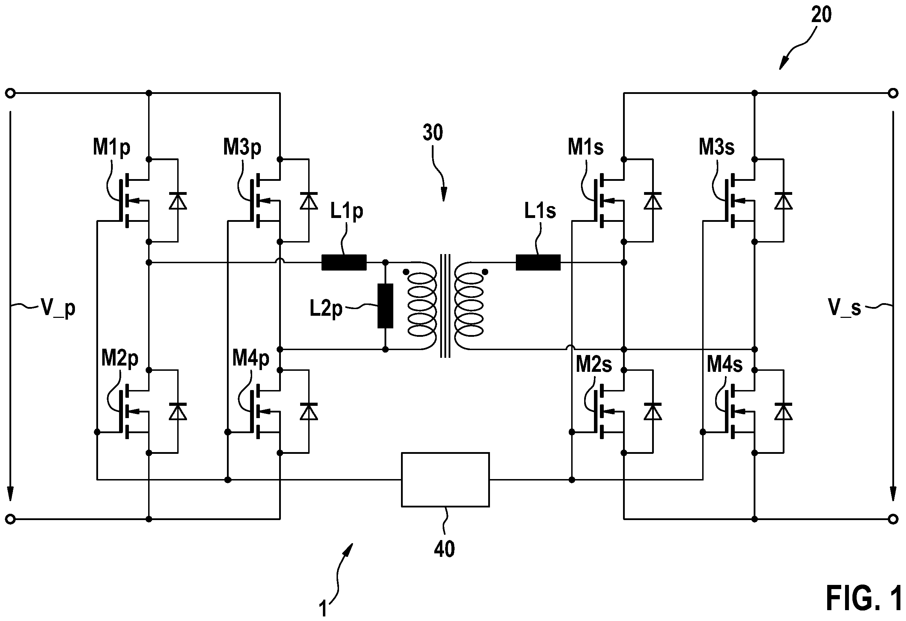

Figur 1 zeigt eine schematische Darstellung eines Dual-Active-Bridge-Wandlers 1 gemäß einer Ausführungsform. Eine Primärseite umfasst eine erste Halbbrücke mit zwei Schaltelementen M1p und M2p, sowie eine zweite Halbbrücke mit zwei Schaltelementen M3p und M4p. Eine Sekundärseite 20 umfasst ebenfalls zwei Halbbrücken mit den Schaltelementen M1s bis M4s. Zwischen der Primärseite und der Sekundärseite umfasst ein Transformatorbereich 30 eine erste primärseitige Induktivität L1p, eine zweite primärseitige Induktivität L2p sowie eine sekundärseitige Induktivität L1s. Primärseitig wird eine Eingangsspannung V_p bereitgestellt, welche durch den Dual-Active-Bridge-Wandler 1 in eine sekundärseitige Ausgangsspannung V_s gewandelt wird. Zur Ansteuerung der Schaltelemente M1p bis M4p sowie M1s bis M4s kann eine Steuereinrichtung 40 vorgesehen sein. Neben der in Figur 1 dargestellten Ausführungsform eines Dual-Active-Bridge-Wandlers 1 kann das nachfolgend beschriebene Prinzip der vorliegenden Erfindung jedoch auch grundsätzlich auf beliebige andere geeignete Gleichspannungswandler angewandt werden. Insbesondere kann die erfindungsgemäße Überlagerung einer Steuergröße mit einem Rippelanteil auch auf weitere Variationen von Dual-Active-Bridge-Wandler angewendet werden. Derartige Variationen umfassen insbesondere beispielsweise Spannungswandler welche primärseitigen und/oder sekundärseitig nur eine Halbbrücke mit einem geteilten Eingangskondensator aufweisen. Ferner sind zum Beispiel auch Multilevel-Konfigurationen der Transistoren zur Erhöhung der Eingangsspannung oder Glättung der Transformatorspannungen möglich. Weiterhin kann gegebenenfalls auch eine oder mehrere der Induktivitäten des Koppelnetzwerks entfallen, oder eine Sekundärseite Querinduktivität implementiert werden.

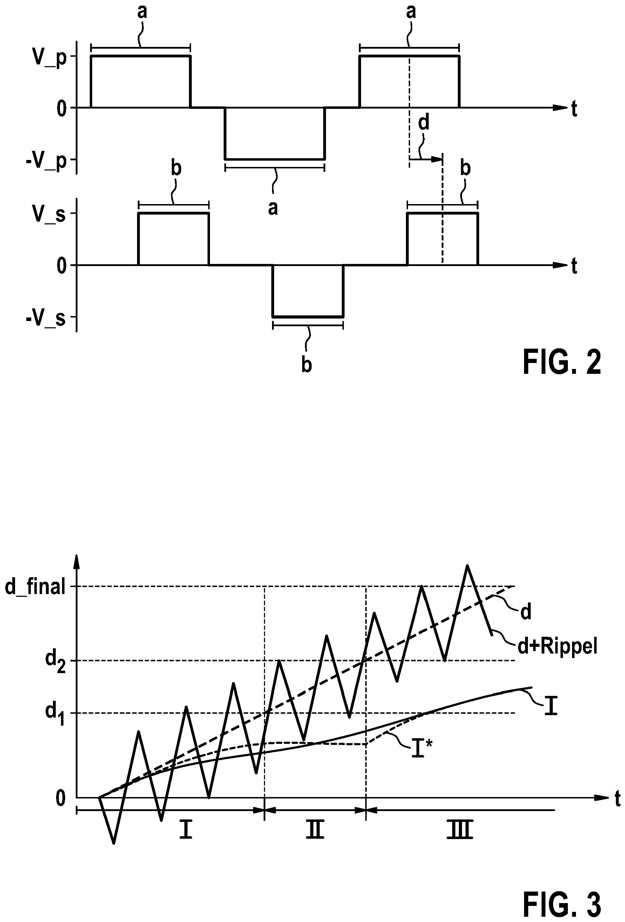

Figur 2 zeigt eine schematische Darstellung der Spannungsabläufe beim Betreiben des Dual-Active-Bridge-Wandlers 1. Wie im oberen Bereich von Figur 2 dargestellt, wird durch die primärseitigen Schaltelemente M1s bis M4s ein pulsförmiger Spannungsverlauf bereitgestellt, wobei eine zeitliche Dauer eines Pulses durch einen ersten Phasenwinkel a vorgegeben ist. Sekundärseitig ergeben sich Spannungspulse, wobei eine zeitliche Dauer der sekundärseitigen Pulse durch einen zweiten Phasenwinkel b vorgegeben ist. Ein dritter Phasenwinkel d ist durch eine zeitliche Verschiebung zwischen den Zentralpunkten der Spannungspulse auf der Primärseite und der Sekundärseite gegeben. Als Regelgröße für einen Ausgangsstrom des Dual-Active-Bridge-Wandlers 1 kann insbesondere beispielsweise der dritte Phasenwinkel d variiert werden.

Bei einem kontinuierlichen Anstieg der Regelgröße, insbesondere des dritten Phasenwinkel d, kommt es hierbei in einem Totzeitbereich beim Übergang zwischen dem weichschaltenden Betrieb und dem hartschaltenden Betrieb des Dual-Active-Bridge-Wandlers 1 zu einer Stagnation der Ausgangsgröße, insbesondere des Ausgangsstroms.

Um diesem Effekt entgegenzuwirken und über den Totzeitbereich hinweg einen möglichst streng monotonen Anstieg zu erreichen, kann die Regelgröße d mit einem zusätzlichen Rippelanteil überlagert werden. Bei diesem Rippelanteil kann es sich beispielsweise um ein periodisches Signal mit einer vorgegebenen Frequenz handeln. Auf diese Weise wird die Regelgröße d mit der Amplitude des überlagernden Rippels periodisch schwanken. Hat die Regelgröße d beispielsweise einen Wert D und wird die Amplitude des überlagernden Rippelanteils mit A bezeichnet, so wird der Dual-Active-Bridge-Wandler 1 mit einer Regelgröße im Bereich von D ± A betrieben. Wird die Amplitude A des Rippelanteils ausreichend groß gewählt, so kann für jeden Wert der Regelgröße d sichergestellt werden, dass die Regelgröße d zumindest zeitweise außerhalb des Totzeitbereiches liegt. Hierdurch kann auch insbesondere im Totzeitbereich eine, wenn auch gegebenenfalls reduzierte, so doch streng monotone Steigung der Ausgangsgröße über den gesamten Regelbereich erreicht werden.

Figur 3 veranschaulicht diesen Zusammenhang und stellt einen zeitlichen Verlauf der Ausgangsgröße in Form eines Ausgangsstroms I sowie die hierbei zugrunde liegende Regelgröße d dar. Dabei ist der Rippelanteil, mit welchem die Regelgröße d überlagert wird, hier stark vereinfacht und mit einer sehr niedrigen Frequenz dargestellt. Diese niedrige Frequenz dient lediglich dem besseren Verständnis. In der Praxis und im operativen Betrieb wird in der Regel jedoch für den überlagernden Rippel eine deutlich höhere Frequenz gewählt werden.

Bereich I in Figur 3 kennzeichnet den hartschaltenden Bereich, Bereich III den weichschaltenden Bereich und Bereich II den Totzeitbereich im Übergang zwischen hartschaltendem und weichschaltendem Bereich.

Wie in Figur 3 zu erkennen ist, kommt es auch in dem Totzeitbereich zwischen der ersten und zweiten gestrichelten Linie zu keiner Stagnation der Ausgangsgröße I. Zum Vergleich ist der Verlauf der Ausgangsgröße I* gestrichelt dargestellt, der in der Regelgröße d ohne überlagerten Rippel zugrunde liegen würde.

Wie bereits zuvor ausgeführt, kann der Rippelanteil als periodisches Signal mit einer festvorgegebenen Frequenz gebildet werden. Alternativ ist es auch möglich, die Frequenz des Rippels innerhalb eines vorgegebenen Frequenzbereichs zu variieren. Beispielsweise kann die Frequenz innerhalb des vorgegebenen Frequenzbereichs periodisch ansteigen und/oder abfallen. Auch beispielsweise eine sinusförmige Variation der Rippelfrequenz innerhalb des vorgegebenen Frequenzbereichs ist möglich. Selbstverständlich sind auch beliebige andere Prinzipien zur Variation der Frequenz für den Rippelanteil innerhalb eines vorgegebenen Frequenzbereichs möglich.

Der Rippelanteil, welcher der Regelgröße d überlagert wird, kann hierbei eine beliebige Signalform aufweisen. Insbesondere sind beispielsweise rechteckförmige, dreieckförmige, sägezahnförmige oder sinusförmige Rippelanteile möglich.

Die Amplitude des Rippelanteils kann beispielsweise über den gesamten Regelbereich hinweg konstant gehalten werden. Darüber hinaus kann gegebenenfalls auch die Amplitude des Rippelanteils variiert werden. Beispielsweise ist es möglich, die Amplitude des Rippelanteils im Bereich des zu erwartenden Totzeitbereiches zu erhöhen. Aber auch beliebige andere Schemata für ein Anpassen der Amplitude des Rippelanteils sind grundsätzlich möglich. Insbesondere sollte die Amplitude des Rippelanteils stets mindestens so groß gewählt werden, dass auch innerhalb des Totzeitbereiches durch Überlagern der Regelgröße d mit dem Rippelanteil der Totzeitbereich zumindest teilweise verlassen werden kann.

In den vorausgegangenen Ausführungen wurde das Prinzip der Ansteuerung für eine Schaltungsanordnung mit einem einzelnen Dual-Active-Bridge-Wandler 1 beschrieben. Darüber hinaus ist es grundsätzlich auch möglich, dieses Prinzip auf Schaltungsanordnungen mit mehreren parallel geschalteten Dual-Active-Bridge-Wandlern anzuwenden. Insbesondere kann bei einer Schaltungsanordnung mit mehreren parallel geschalteten Dual-Active-Bridge-Wandler der Rippelanteil, mit dem die Regelgrößen überlagert werden, für die einzelnen Dual-Active-Bridge-Wandler verschieden gewählt werden.

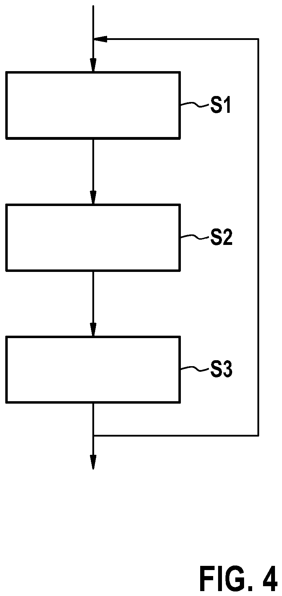

Figur 4 zeigt eine schematische Darstellung eines Ablaufdiagramms, wie es einem Verfahren zum Betreiben eines Dual-Active-Bridge-Wandlers 1 gemäß einer Ausführungsform zugrunde liegt. Das Verfahren kann grundsätzlich beliebige Schritte umfassen, wie sie zuvor im Zusammenhang mit dem Dual-Active-Bridge-Wandler 1 bereits beschrieben worden sind. Analog kann auch der zuvor beschriebene Dual-Active-Bridge-Wandler beliebige Komponenten umfassen, um das nachfolgend beschriebene Verfahren zu realisieren.

In einem ersten Schritt kann eine Regelgröße d für den Betrieb des Dual-Active-Bridge-Wandlers 1 ermittelt werden. Das Ermitteln kann beispielsweise das Empfangen der Regelgröße von einer externen Regeleinrichtung umfassen. Zusätzlich oder alternativ ist es auch möglich, die Regelgröße d auf Grundlage einer oder mehrerer weiterer Sollwerte und/oder Messwerte zu bestimmen. In Schritt S2 kann die ermittelte Regelgröße d mit einem Rippelanteil überlagert werden. Für den Rippelanteil, mit dem die Regelgröße d überlagert wird, gelten die bereits weiter oben ausgeführten Möglichkeiten. In Schritt S3 schließlich kann der Dual-Active-Bridge-Wandler 1 unter Verwendung der mit dem Rippelanteil überlagerten Regelgröße d angesteuert werden.

Zusammenfassend betrifft die vorliegende Erfindung das Ansteuern eines Dual-Active-Bridge-Wandlers. Insbesondere ist vorgesehen, eine Regelgröße für den Dual-Active-Bridge-Wandler mit einem zusätzlichen Rippelanteil zu überlagern und den Dual-Active-Bridge-Wandler mit einer Kombination der Regelgröße und dem zusätzlichen Rippelanteil anzusteuern.

## Patentansprüche

1. Verfahren zum Betreiben eines Dual-Active-Brigde-Wandlers (1), mit den Schritten:
Ermitteln (S1) eines Phasenwinkels als Regelgröße (d) für den Dual-Active-Brigde-Wandler (1);
Überlagern (S2) der Regelgröße (d) mit einem Rippelanteil; und
Ansteuern (S3) des Dual-Active-Brigde-Wandlers (1) unter Verwendung der mit dem Rippelanteil überlagerten Regelgröße (d), wobei der Rippelanteil eine periodische Größe mit einer vorbestimmten Signalform umfasst.

2. Verfahren nach Anspruch 1, wobei die vorbestimmte Signalform einen rechteckförmigen Signalverlauf, einen sinusförmigen Signalverlauf, einen dreieckförmigen Signalverlauf oder einen sägezahnförmigen Signalverlauf umfasst.

3. Verfahren nach einem der Ansprüche 1 bis 2, wobei der Rippelanteil eine fest vorbestimmte Frequenz aufweist.

4. Verfahren nach einem der Ansprüche 1 bis 3, wobei eine Frequenz des Rippelanteils innerhalb eines vorbestimmten Frequenzbereichs periodisch variiert wird.

5. Verfahren nach einem der Ansprüche 1 bis 4, wobei eine Amplitude des Rippelanteils unter Verwendung eines aktuellen Werts der Regelgröße (d) eingestellt wird.

6. Dual-Active-Brigde-Wandler (1) mit einer Steuereinrichtung (40), die dazu ausgelegt ist, einen Phasenwinkel als eine Regelgröße (d) für den Dual-Active-Brigde-Wandler (1) zu ermitteln, die Regelgröße (d) mit einem Rippelanteil zu überlagern, und den Dual-Active-Brigde-Wandler (1) unter Verwendung der mit dem Rippelanteil überlagerten Regelgröße (d) anzusteuern, wobei der Rippelanteil eine periodische Größe mit einer vorbestimmten Signalform umfasst.

7. Spannungswandleranordnung mit mindestens einem Dual-Active-Brigde-Wandler (1) nach Anspruch 6.

8. Spannungswandleranordnung nach Anspruch 7, wobei die Spannungswandleranordnung mehrere Dual-Active-Brigde-Wandler (1) umfasst, und wobei die Regelgrößen (d) der einzelnen Dual-Active-Brigde-Wandler (1) mit unterschiedlichen Rippelanteilen überlagert werden.

## Claims

1. Method for operating a dual-active-bridge converter (1), having the steps of:
ascertaining (S1) a phase angle as a control variable (d) for the dual-active-bridge converter (1);
superimposing (S2) the control variable (d) with a ripple component; and
controlling (S3) the dual-active-bridge converter (1) by using the control variable (d) superimposed with the ripple component, wherein the ripple component comprises a periodic variable having a predetermined signal shape.

2. Method according to Claim 1, wherein the predetermined signal shape comprises a rectangular signal characteristic, a sinusoidal signal characteristic, a triangular signal characteristic or a sawtooth signal characteristic.

3. Method according to either of Claims 1 and 2, wherein the ripple component has a fixed predetermined frequency.

4. Method according to one of Claims 1 to 3, wherein a frequency of the ripple component is periodically varied within a predetermined frequency range.

5. Method according to one of Claims 1 to 4, wherein an amplitude of the ripple component is set using a present value of the control variable (d).

6. Dual-active-bridge converter (1) having a control device (40) which is designed to ascertain a phase angle as a control variable (d) for the dual-active-bridge converter (1), to superimpose the control variable (d) with a ripple component, and to control the dual-active-bridge converter (1) by using the control variable (d) superimposed with the ripple component, wherein the ripple component comprises a periodic variable having a predetermined signal shape.

7. Voltage-converter arrangement having at least one dual-active-bridge converter (1) according to Claim 6.

8. Voltage-converter arrangement according to Claim 7, wherein the voltage-converter arrangement comprises a plurality of dual-active-bridge converters (1), and wherein the control variables (d) of the individual dual-active-bridge converters (1) are superimposed with different ripple components.

## Revendications

1. Procédé pour faire fonctionner un convertisseur à double pont actif (1), comprenant les étapes consistant à :
déterminer (S1) un angle de phase en tant que grandeur de régulation (d) pour le convertisseur à double pont actif (1) ;
superposer (S2) une composante d'ondulation à la grandeur de régulation (d) ; et
commander (S3) le convertisseur à double pont actif (1) en utilisant la grandeur de régulation (d) superposée à la composante d'ondulation, la composante d'ondulation comprenant une grandeur périodique ayant une forme de signal prédéterminée.

2. Procédé selon la revendication 1, dans lequel la forme de signal prédéterminée comprend une forme de signal rectangulaire, une forme de signal sinusoïdale, une forme de signal triangulaire ou une forme de signal en dents de scie.

3. Procédé selon l'une quelconque des revendications 1 à 2, dans lequel la composante d'ondulation présente une fréquence prédéterminée fixe.

4. Procédé selon l'une quelconque des revendications 1 à 3, dans lequel une fréquence de la composante d'ondulation est amenée à varier périodiquement dans une plage de fréquences prédéterminée.

5. Procédé selon l'une quelconque des revendications 1 à 4, dans lequel une amplitude de la composante d'ondulation est réglée en utilisant une valeur actuelle de la grandeur réglée (d).

6. Convertisseur à double pont actif (1) comprenant un dispositif de commande (40) conçu pour déterminer un angle de phase en tant que grandeur de commande (d) pour le convertisseur à double pont actif (1), pour superposer une composante d'ondulation à la grandeur de commande (d), et pour commander le convertisseur à double pont actif (1) en utilisant la grandeur de commande (d) superposée à la composante d'ondulation, la composante d'ondulation comprenant une grandeur périodique ayant une forme de signal prédéterminée.

7. Agencement de convertisseur de tension comprenant ledit au moins un convertisseur à double pont actif (1) selon la revendication 6.

8. Agencement de convertisseur de tension selon la revendication 7, l'agencement de convertisseur de tension comprenant plusieurs convertisseurs à double pont actif (1), et les grandeurs de régulation (d) des différents convertisseurs à double pont actif (1) étant superposées à des composantes d'ondulation différentes.
